# EUROPÄISCHE PATENTSCHRIFT

(11) **EP 0 956 530 B1**
(45) Veröffentlichungstag und Bekanntmachung des Hinweises auf die Patenterteilung: **17.07.2002**
(21) Anmeldenummer: 98909297.8
(22) Anmeldetag: 29.01.1998
(51) Int. Cl.: G06F 15/80

(54) **VERFAHREN ZUR TRANSFORMATION EINER ZUR NACHBILDUNG EINES TECHNISCHEN PROZESSES DIENENDEN FUZZY-LOGIK IN EIN NEURONALES NETZ**
METHOD FOR TRANSFORMING A FUZZY LOGIC USED TO SIMULATE A TECHNICAL PROCESS INTO A NEURAL NETWORK
PROCEDE DE TRANSFORMATION D'UNE LOGIQUE FLOUE SERVANT A LA SIMULATION D'UN PROCESSUS TECHNIQUE EN UN RESEAU NEURONAL

(30) Priorität: 03.02.1997 DE 19703965
(43) Veröffentlichungstag der Anmeldung: 17.11.1999
(73) Patentinhaber: SIEMENS AKTIENGESELLSCHAFT, 80333 München (DE)
(72) Erfinder: HOFFMANN, Wolfgang, D-91052 Erlangen (DE); SCHWULERA, Erik, D-91058 Erlangen (DE)
(86) Internationale Anmeldenummer: DE9800259
(87) Internationale Veröffentlichungsnummer: WO9834175

(56) Entgegenhaltungen:
- WO-A-94/22074
- US-A- 5 416 888
- CHAO C -T ET AL: "IMPLEMENTATION OF A FUZZY INFERENCE SYSTEM USING A NORMALIZED FUZZY NEURAL NETWORK" FUZZY SETS AND SYSTEMS, Bd. 75, Nr. 1, 13.Oktober 1995, Seiten 17-31, XP000520087
- YAOCHU JIN ET AL: "NEURAL NETWORK BASED FUZZY IDENTIFICATION AND ITS APPLICATION TO MODELLING AND CONTROL OF COMPLEX SYSTEMS" IEEE TRANSACTIONS ON SYSTEMS, MAN AND CYBERNETICS, Bd. 25, Nr. 6, 1.Juni 1995, Seiten 990-997, XP000526133

## Beschreibung

Bei Neuro-Fuzzy-Systemen ist das Ein-Ausgangsverhalten von Fuzzy-Systemen unter der Verwendung neuronaler Netze optimierbar. Hiermit können die Nachteile von Fuzzy-Systemen und von neuronalen Netzen kompensiert werden. Eine Möglichkeit ein Fuzzy-System mittels eines neuronalen Netzes zu optimieren besteht darin, ein Fuzzy-System in ein neuronales Netz zu transformieren und dieses mit Ein-Ausgabe-Meßwerten zu trainieren. Während im Fuzzy-System das Systemverhalten eines nachzubildenden technischen Prozesses einbringbar ist, ermöglicht die Transformation in ein neuronales Netz eine zusätzliche Optimierung unter Zuhilfenahme von Ein-Ausgabe-Meßwerten des nachzubildenden technischen Prozesses. Die Optimierung kann dabei durch Optimierungsalgorithmen automatisiert werden, welche mit dem Neuro-Fuzzy-System unter Zuhilfenahme eines Computer ausführbar sind.

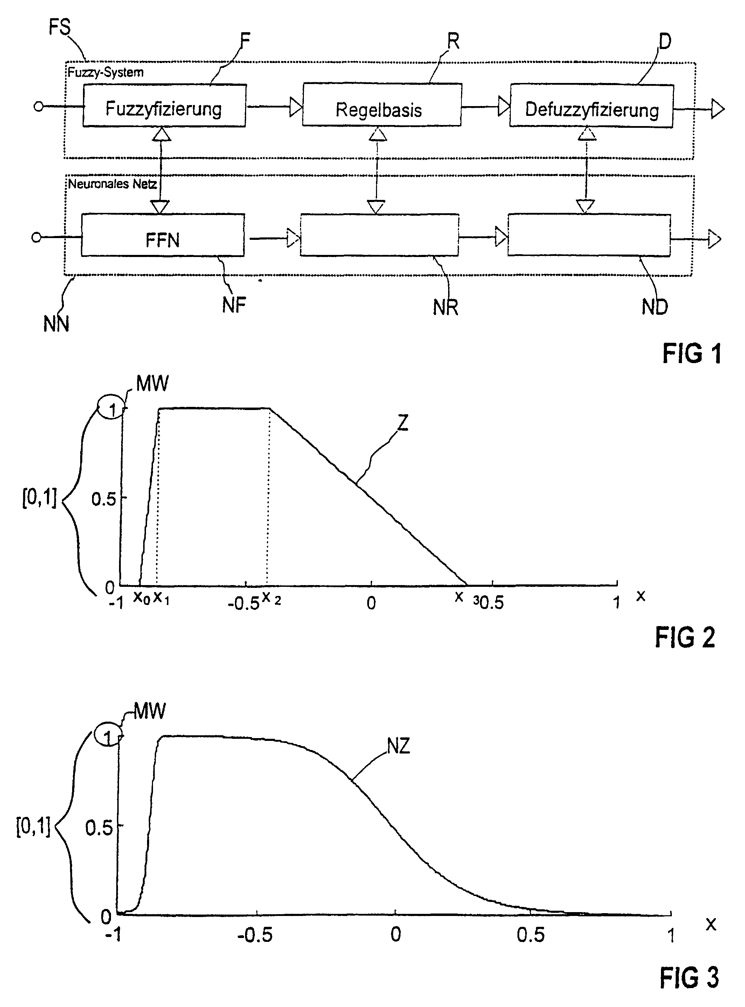

Für die Transformation der Komponenten eines Fuzzy-Systems in die Strukturen eines neuronalen Netzes sind verschiedene Verfahren bekannt. Ein Fuzzy-System weist insbesondere eine Fuzzy-Logik auf, welche in der Regel aus den drei Komponenten "Fuzzyfizierung", "Regelwerk" und "Defuzzyfizierung" besteht. Die drei Komponenten können jeweils unter Verwendung bestimmter Neuronentypen abgebildet werden. Der prinzipielle Aufbau eines Neuro-Fuzzy-Systems, d.h. die einzelnen Komponenten der Fuzzy-Logik innerhalb eines Neuro-Fuzzy-Netzes, sind in Figur 1 dargestellt. Bei der Transformation der Fuzzy-Logik FS in das neuronale Netz NN werden die Komponenten Fuzzyfizierung F, Regelbasis R und Defuzzyfizierung D im neuronalen Netz NN als neuronales Fuzzyfizierungsnetz NF, neuronales Regelbasisnetz NR und neuronales Defuzzyfizierungsnetz ND nachgebildet.

Zur Fuzzyfizierung werden in der Regel trapez- oder dreieckförmige Zugehörigkeitsfunktionen verwendet. Deren Abbildung im neuronalen Netz erfolgt meist mit Sigmoid- oder Gaußfunktionen.

In der Figur 2 ist beispielhaft eine trapezförmige Zugehörigkeitsfunktion Z mit den Parametern X0,X1,X2 und X3 dargestellt. Diese Zugehörigkeitsfunktion Z weist einen nichtlinearen Verlauf auf und ist auf einen normierten Wertebereich [0,1] der Fuzzy-Logik FS normiert, welcher einen Maximalwert MW in der Regel der Größe 1 aufweist.

In der Figur 3 ist beispielhaft eine, das Bezugszeichen NZ aufweisende Transformation der in der Figur 2 dargestellten Zugehörigkeitsfunktion Z im neuronalen Netz NN dargestellt. Die Nachbildung nichtlinearer Übertragungsfunktionen in der Fuzzy-Logik FS, wie beispielsweise die trapezförmige Zugehörigkeitsfunktion Z, erfolgt im neuronalen Netzwerk NN bevorzugt mittels Sigmoidfunktionen.

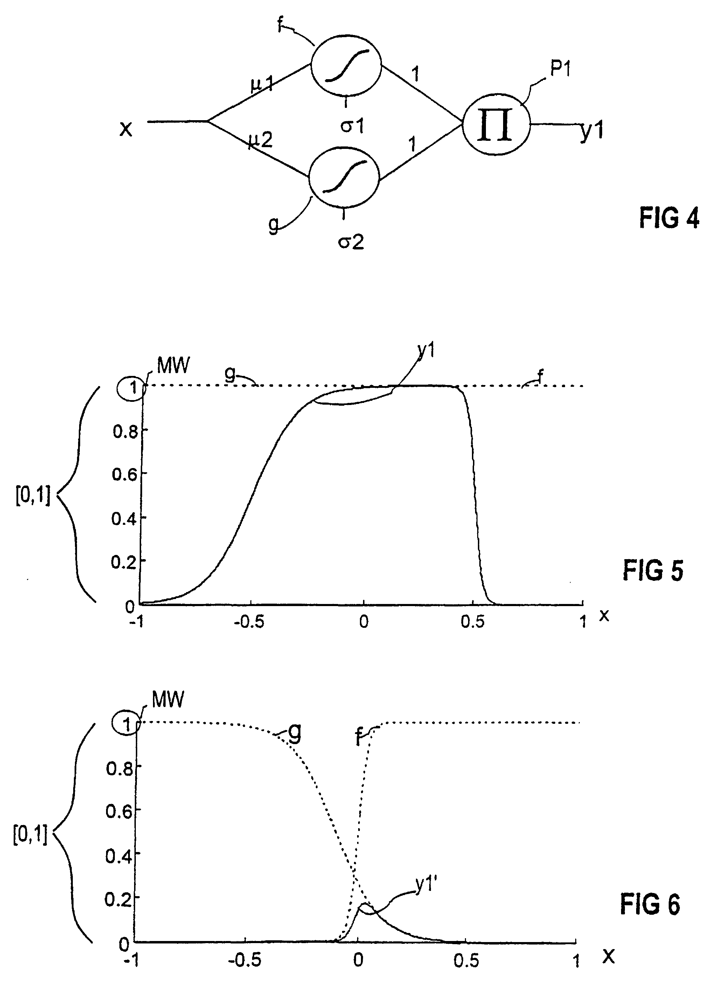

Aus der deutschen Patentschrift DE 195 28 984 C1 ist ein Verfahren zur Transformation einer Fuzzy-Logik in ein neuronales Netz bekannt, wobei zur Nachbildung von Zugehörigkeitsfunktionen Sigmoidfunktionen multiplikativ verknüpft werden. Eine derartige multiplikative Verknüpfung von Sigmoidfunktionen ist in der Figur 4 dargestellt. Die Sigmoidfunktionen f und g weisen dabei die Parameter µ1, σ1 und µ2, σ2 auf.

In der Figur 5 ist beispielhaft eine Ergebnisfunktion y1 der Nachbildung einer nichtlinearen, trapezförmigen Zugehörigkeitsfunktion Z der Fuzzy-Logik FS im neuronalen Netz NN dargestellt. Mit der Transformation in das neuronale Netz NN ist eine Voreinstellung der Parameter µ1, σ1, µ2, σ2 der Sigmoidfunktionen f und g verbunden. Durch die Optimierung des neuronalen Netzes NN, insbesondere mit Ein-/Ausgabe-Meßwerten, werden die Parameter µ1, σ1, µ2, σ2 der Sigmoidfunktionen f und g und damit deren Verlauf verändert.

Beim oben genannten Verfahren kann der Fall auftreten, daß sich die Parameter µ1, σ1, µ2, σ2 so verändern, daß eine Rücktransformation des neuronalen Netzes NN in eine Fuzzy-Logik FS nicht ohne weiteres möglich ist. Dies ist beispielsweise in der Figur 6 bei dem Verlauf einer mittels Optimierung des neuronalen Netzes NN erreichten Ergebnisfunktion y1' dargestellt. Da der Wertebereich der Zugehörigkeitsfunktion y1' nicht mehr dem der Sigmoidfunktionen f und g entspricht, ist eine Rücktransformation in die Fuzzy-Logik FS nicht mehr möglich. Dies hat zur Folge, daß ein derartiges Neuro-Fuzzy-System nach der Optimierung als neuronales Netz aufgebaut ist und neuronale Strukturen aufweist, aber nicht mehr als reines Fuzzy-System betreibbar ist. Die praktische Realisierung beispielsweise mittels einer standardisierten, handelsüblichen Fuzzy-System-Software ist dadurch nicht mehr möglich.

Aus der Druckschrift Procedings of the IEEE, Bd.83, Nr.3, März 1995, Seiten 378 bis 406, "Neuro-Fuzzy Modeling and Control" ist es bekannt, zur Nachbildung von Zugehörigkeitsfunktionen aus zwei Sigmoidfunktionen ebenfalls das Produkt oder den absoluten Betrag aus deren Differenz zu nehmen. Auch bei der Nachbildung mittels Differenz- und Betragsbildung, kann der bereits oben beschriebene Fall auftreten, daß nach dem Training des Neuronalen Netzes der Wertebereich der Zugehörigkeitsfunktion nicht mehr dem der Sigmoidfunktionen entspricht. Eine Rücktransformation des trainierten Neuronalen Netzes in ein reines Fuzzy-System ist dann nicht mehr möglich. Des weiteren ist die Betragsbildung nicht mehr mit Standard-Neuronen, wie beispielsweise Summier- oder Produktneuronen möglich. Da Betrags-Neuronen nicht ohne weiteres differenzierbar sind, erfordert bereits das Training des Neuronalen Netzes zusätzliche Fallunterscheidungen, wodurch eine praktische Realisierung, beispielsweise mittels einer standardisierten, handelsüblichen Fuzzy-System-Software nicht mehr möglich ist.

Aufgabe der Erfindung ist es somit ein Verfahren zur Transformation einer Fuzzy-Logik in ein neuronales Netz anzugeben, wobei zur Nachbildung von Zugehörigkeitsfunktionen Sigmoidfunktionen derartig verknüpft werden, daß auch nach Optimierung des neuronalen Netzes eine Rücktransformation des neuronalen Netzes in eine Fuzzy-Logik möglich ist.

Die Aufgabe wird gelöst mit dem im Anspruch 1 angegebenen Verfahren und der in den Unteransprüchen angegebenen Vorrichtung zur Durchführung des Verfahrens. Weitere vorteilhafte Ausführungsformen der Erfindung sind in den Unteransprüchen angegeben.

Vorteil des erfindungsgemäßen Verfahrens ist es, daß eine Fuzzy-Logik insbesondere komponentenweise in ein neuronales Netz transformierbar ist und dieses dann gesamtheitlich, d.h. alle Komponenten zusammen optimierbar ist. Somit können zusätzlich zu dem in der Fuzzy-Logik berücksichtigbaren Systemverhalten, wie beispielsweise die Anzahl der zu verwendenden Zugehörigkeitsfunktionen, Meßdaten des nachzubildenden technischen Prozesses im Optimierungsverfahren des neuronalen Netzes eingebracht werden. Durch das erfindungsgemäße Verfahren zur Transformation der insbesondere dreieck- oder trapezförmigen Zugehörigkeitsfunktionen können deren Parameter im neuronalen Netz bei dessen Optimierung nur so variiert werden, daß in jedem Fall eine anschließende Rücktransformation des neuronalen Netzes in eine optimierte Fuzzy-Logik erfolgen kann.

Vorteil eines Neuro-Fuzzy-Systems mit dem erfindungsgemäßen Verfahren zur Transformation der Fuzzy-Logik in ein neuronales Netz ist es somit, durch die Möglichkeit der Rücktransformation des trainierten neuronalen Netzes letztendlich eine entsprechend optimierte Fuzzy-Logik zu erhalten. Dadurch wird vorteilhaft die Verwendung von insbesondere standardisierter Fuzzy-System-Software zur Beschreibung der optimierten Fuzzy-Logik ermöglicht.

Die Erfindung wird anhand der nachfolgend kurz angeführten und oben zum Teil bereits beschriebenen Figuren erläutert. Dabei zeigt:
- FIG 1: beispielhaft die einzelnen Komponenten einer Fuzzy-Logik und des dazugehörigen neuronalen Netzes eines Neuro-Fuzzy-Systems,
- FIG 2: beispielhaft eine trapezförmige Zugehörigkeitsfunktion einer Fuzzy-Logik,
- FIG 3: beispielhaft die Nachbildung der in Figur 2 aufgeführten Zugehörigkeitsfunktion im neuronalen Netz mittels Sigmoidfunktionen,
- FIG 4: beispielhaft ein bekanntes Verfahren zur multiplikativen Verknüpfung von Sigmoidfunktionen,
- FIG 5: beispielhaft die Nachbildung einer Zugehörigkeitsfunktion mittels der in Figur 4 dargestellten Sigmoidfunktionen,
- FIG 6: beispielhaft eine nachgebildete Zugehörigkeitsfunktion nach Optimierung des neuronalen Netzes,
- FIG 7: die beispielhaften Neuronen des erfindungsgemäßen Verfahrens,
- FIG 8: beispielhaft den Verlauf einer mittels des in Figur 7 angegebenen Schaltbildes gemäß der Erfindung transformierten trapezförmigen Zugehörigkeitsfunktion,
- FIG 9: beispielhaft den Verlauf zweier optimierter Zugehörigkeitsfunktionen nach Optimierung des neuronalen Netzes, wobei der einen Zugehörigkeitsfunktion eine Transformation nach dem erfindungsgemäßen Verfahren zugrunde liegt.

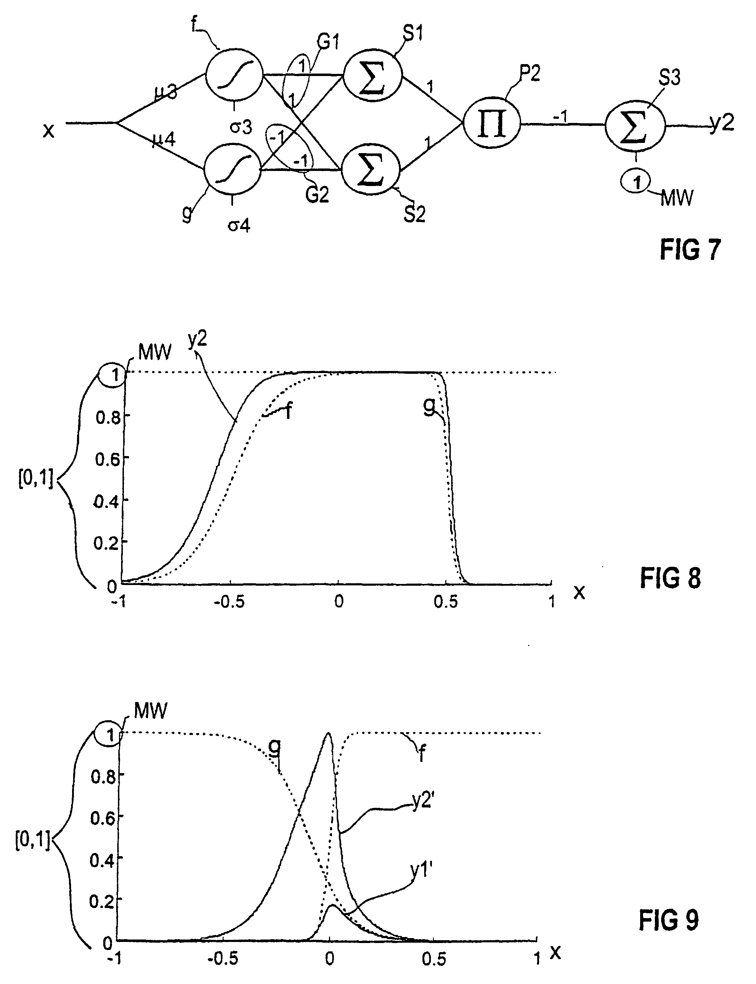

In den Figuren 8 und 9 sind Ergebnisfunktionen y2 und y2' dargestellt, welche bei einer Transformation einer Fuzzy-Logik FS in ein neuronales Netz NN der Figur 1 mittels des erfindungsgemäßen Verfahrens auftreten können. Dabei stellen die Ergebnisfunktionen y2 und y2' das Ergebnis der Nachbildung der in der Figur 2 dargestellten Zugehörigkeitsfunktion Z des Fuzzy-Systems FS mittels zweier Sigmoidfunktionen f und g im neuronalen Netz NN dar. Damit nach Optimierung des neuronalen Netzes NN eine Rücktransformation in die Fuzzy-Logik FS möglich ist, weisen die in den Figuren 8 und 9 dargestellten Ergebnisfunktionen y2 und y2' jeweils folgende Merkmale auf:
1. Der Wertebereich der Ergebnisfunktionen y2 und y2' ist auf einen normierten, einen Maximalwert MW aufweisenden Wertebereich [0,1] bezogen,
2. die Ergebnisfunktionen y2 und y2' erreichen in jedem Fall, d.h. unabhängig von Verlauf und Lage der Sigmoidfunktionen f und g, jeweils den Maximalwert MW, welcher in der Regel die Größe 1 aufweist, und
3. der Funktionswert der Ergebnisfunktionen y2 und y2' nimmt entweder den Wert 0 oder den Maximalwert MW, d.h. in der Regel die Größe 1 an, wenn der Betrag der Abszisse x über alle Grenzen wächst.

Das erfindungsgemäße Verfahren dient zur Transformation einer, zur Nachbildung eines technischen Prozesses dienenden Fuzzy-Logik FS in ein neuronales Netz NN. In diesem werden zur Nachbildung von insbesondere dreieck- oder trapezförmigen Zugehörigskeitsfunktionen Z Sigmoidfunktionen f und g verknüpft. Die Verknüpfung erfolgt derart, daß aus den Sigmoidfunktionen f und g mindestens eine Differenz gebildet wird. Aus dieser wird ein positives Verknüpfungsergebnis gebildet, welches auf einen, einen Maximalwert MW aufweisenden Wertebereich [0,1] der Fuzzy-Logik FS normiert wird.

Bevorzugt weist das neuronale Netz NN als Komponente ein neuronales Fuzzifizierungsnetz NF auf, welches zur Verknüpfung der Sigmoidfunktionen f und g dient. Gemäß des erfindungsgemäßen Verfahrens zur Transformation einer Fuzzy-Logik FS in ein neuronales Netz NN werden die Sigmoidfunktionen f und g derartig verknüpft, daß aus diesen mindestens eine erste Differenz gebildet wird, und eine zweite Differenz aus dem Maximalwert MW und dem Quadrat P2 der ersten Differenz gebildet wird. Für den Fall, daß der Maximalwert MW die bevorzugte Größe 1 aufweist, wird die Ergebnisfunktion y2 bzw. y2' somit als 1-[f(x,µ3,σ3)-g(x,µ4,σ4)]² gebildet.

Im Ablaufplan der Figur 7 ist beispielhaft eine Ausführungsform des erfindungsgemäßen Verfahrens dargestellt. Erfindungsgemäß werden zwei Sigmoidfunktionen f und g jeweils sowohl über ein erstes Neuron S1, als auch über ein zweites Neuron S2 additiv verknüpft. Zur Bildung der Quadratfunktion [f(x,µ3,σ3)-g(x,µ4,σ4)]², werden die Ausgangssignale des ersten und zweiten Neurons S1 und S2 vorteilhaft über ein drittes Neuron P2 multiplikativ und anschließend über ein viertes Neuron S3 additiv mit dem Maximalwert MW verknüpft.

Vorteilhaft ist das erfindungsgemäße Verfahren mittels einer Vorrichtung, wie beispielsweise einem auf einem Computer oder in einem elektronischen Schaltkreis installierten Neuro-Fuzzy-System durchführbar, wobei sich die Neuronen des neuronalen Netzes insbesondere aus sogenannten Standardneuronentypen zusammensetzen. Die Neuronen können bei der praktischen Realisierung dabei insbesondere als Software- oder Hardware-Komponenten oder einer Kombination von Soft- und Hardware ausgeführt sein. Dabei werden zur Verknüpfung der Sigmoidfunktionen f und g insbesondere Produkt-Neuronen und Summier-Neuronen eingesetzt. Im Beispiel der Figur 7 ist das erste, zweite und vierte Neuron S1, S2 bzw. S3 als ein Summier-Neuron, und das dritte Neuron P2 als ein Produkt-Neuron ausgeführt.

Die Sigmoidfunktionen f und g weisen in der Regel jeweils wenigstens einen, deren Steigung bestimmenden Parameter µ3 bzw. µ4 und einen Parameter σ3 bzw. σ4 zur Verschiebung des Wendepunktes auf. Im Beispiel der Figur 7 beziehen sich dabei die Parameter µ3 bzw. µ4 auf die Steigung der Sigmoidfunktionen f bzw. g und weisen insbesondere in Abhängigkeit von Gewichtsparametern G1 und G2 der Summier-Neuronen S1 und S2 ein unterschiedliches Vorzeichen auf.

Bei der Transformation durch das erfindungsgemäße Verfahren werden insbesondere die Parameter µ3, µ4, σ3 und σ4 mit einer Voreinstellung belegt. Beim Optimier-Vorgang des neuronalen Netzes NN sind die Parameter µ3, µ4, σ3 und σ4 durch die erfolgte Transformation des erfindungsgemäßen Verfahrens aber nur so veränderbar, daß eine anschließende Rücktransformation vom neuronalen Netz NN in eine Fuzzy-Logik ermöglicht wird.

In der Figur 9 ist beispielhaft ein möglicher, vorteilhafter Verlauf einer Ergebnisfunktion y2' zu sehen, welche aus der Anwendung des erfindungsgemäßen Verfahren resultiert. Die Ergebnisfunktion y2' weist dabei alle bereits weiter oben aufgeführten Merkmale 1. bis 3. auf, welche notwendig sind, um eine Rücktransformation des neuronalen Netzes NN in eine Fuzzy-Logik zu ermöglichen.

Demgegenüber ist in der Figur 9 zum Vergleich zusätzlich eine Ergebnisfunktion y1' eines herkömmlichen Transformationsverfahrens dargestellt. Aufgrund einer durch Optimierung des neuronalen Netzes bewirkten Verschiebung der verknüpften Sigmoidfunktionen gegeneinander, erreicht die Ergebnisfunktion y1' nicht den Maximalwert MW. Dadurch ist bei herkömmlichen Verfahren eine Rücktransformation des optimierten neuronalen Netzes NN in eine Fuzzy-Logik nicht möglich.

## Patentansprüche

1. Verfahren zur Transformation einer, zur Nachbildung eines technischen Prozesses dienenden Fuzzy-Logik (FS) in ein neuronales Netz (NN), in welchem zur Nachbildung von insbesondere dreieck- oder trapezförmigen Zugehörigskeitsfunktionen (Z) Sigmoidfunktionen (f, g) derart verknüpft werden, daß
a) aus den Sigmoidfunktionen (f, g) mindestens eine erste Differenz (S1, S2) gebildet wird,
b) aus der ersten Differenz (S1, S2) das Quadrat (P2) gebildet wird, und
c) eine Normierung (S3, MW) des Quadrats (P2) der ersten Differenz (S1, S2) auf einen, einen Maximalwert (MW) aufweisenden Wertebereich ([0,1]) der Fuzzy-Logik (FS) bewirkt wird, indem eine zweite Differenz (S3) aus dem Maximalwert (MW) und dem Quadrat (P2) gebildet wird.

2. Verfahren nach Anspruch 1, wobei das neuronale Netz (NN) als Komponente ein neuronales Fuzzifizierungsnetz (NF) zur Verknüpfung der Sigmoidfunktionen (f, g) aufweist.

3. Verfahren nach einem der vorangegangen Ansprüche, wobei der Maximalwert (MW) des normierten Wertebereichs ([0,1]) der Fuzzy-Logik (FS) die Größe 1 aufweist.

4. Verfahren nach einem der vorangegangenen Ansprüche, wobei
a) zwei Sigmoidfunktionen (f, g) über ein erstes Neuron (S1) additiv verknüpft werden,
b) die Sigmoidfunktionen (f, g) über ein zweites Neuron (S2) additiv verknüpft werden,
c) die Ausgangssignale des ersten und zweiten Neurons (S1, S2) über ein drittes Neuron (P2) multiplikativ verknüpft werden, und
d) das dritte Neuron (P2) über ein viertes Neuron (S3) additiv mit dem Maximalwert (MW) verknüpft werden.

5. Verfahren nach einem der vorangegangen Ansprüche, wobei die Sigmoidfunktionen (f, g) jeweils wenigstens einen deren Steigung bestimmenden Parameter (µ3, µ4) aufweisen.

6. Verfahren nach Anspruch 6, wobei die Parameter (µ3, µ4), welche jeweils die Steigung der Sigmoidfunktionen (f, g) bestimmen, ein unterschiedliches Vorzeichen aufweisen.

## Claims

1. Method of transforming a fuzzy logic system (FS) used for simulating a technical process into a neural network (NN) in which, in order to simulate triangular or trapezoidal membership functions (Z) in particular, sigmoid functions (f, g) are linked together in such a way that
a) at least a first difference (S1, S2) is formed from the sigmoid functions (f, g),
b) the square (P2) of the first difference (S1, S2) is formed, and
c) normalization (S3, MW) of the square (P2) of the first difference (S1, S2) to a value range ([0,1]) of the fuzzy logic system (FS), said range having a maximum value (MW), is effected by a second difference (S3) being formed from the maximum value (MW) and the square (P2).

2. Method according to Claim 1, the neural network (NN) having as a component a neural fuzzification network (NF) for linking the sigmoid functions (f, g) together.

3. Method according to one of the preceding claims, the maximum value (MW) of the normalized value range ([0,1]) of the fuzzy logic system (FS) having the magnitude 1.

4. Method according to one of the preceding claims, where
a) two sigmoid functions (f, g) are linked together additively via a first neuron (S1),
b) the sigmoid functions (f, g) are linked together additively via a second neuron (S2),
c) the output signals from the first and second neurons (S1, S2) are linked together multiplicatively via a third neuron (P2), and
d) the third neuron (P2) is linked together additively with the maximum value (MW) via a fourth neuron (S3).

5. Method according to one of the preceding claims, the sigmoid functions (f, g) each having at least one parameter (µ3, µ4) determining their slope.

6. Method according to Claim 6, the parameters (µ3, µ4) which each determine the slope of the sigmoid functions (f, g) having different signs.

## Revendications

1. Procédé pour la transformation d'une logique floue (FS), servant à la simulation d'un processus technique, en un réseau neuronal (NN) dans lequel, pour la simulation de fonctions d'appartenance (Z) notamment triangulaires ou trapézdidales, on combine des fonctions sigmoïdes (f, g) de telle sorte que
a) à partir des fonctions sigmoïdes (f, g), on forme au moins une première différence (S1, S2),
b) à partir de la première différence (S1, S2), on forme le carré (P2), et
c) on calcule une norme (S3, MW) du carré (P2) de la première différence (S1, S2) sur un domaine de valeurs ([0, 1]), contenant une valeur maximale (MW), de la logique floue (FS) en formant une deuxième différence (S3) à partir de la valeur maximale (MW) et du carré (P2).

2. Procédé selon la revendication 1, dans lequel le réseau neuronal (NN) comporte comme élément un réseau neuronal de traduction en flou (NF) pour la combinaison des fonctions sigmoïdes (f, g).

3. Procédé selon l'une des revendications précédentes, dans lequel la valeur maximale (MW) du domaine de valeurs normé ([0, 1]) de la logique floue (FS) a la valeur 1.

4. Procédé selon l'une des revendications précédentes, dans lequel
a) on combine par addition deux fonctions sigmoïdes (f, g) par l'intermédiaire d'un premier neurone (S1),
b) on combine par addition les fonctions sigmoïdes (f, g) par l'intermédiaire d'un deuxième neurone (S2),
c) on combine par multiplication les signaux de sortie du premier et du deuxième neurone (S1, S2) par l'intermédiaire d'un troisième neurone (P2), et
d) on combine par addition avec la valeur maximale (MW) le troisième neurone (P2) par l'intermédiaire d'un quatrième neurone (S3).

5. Procédé selon l'une des revendications précédentes, dans lequel les fonctions sigmoïdes (f, g) comportent chacune au moins un paramètre (µ3, µ4) déterminant leur pente.

6. Procédé selon la revendication 6, dans lequel les paramètres (µ3, µ4) qui déterminent chacun la pente des fonctions sigmoïdes (f, g) ont un signe différent.
